# FASCICULE DE BREVET EUROPEEN

(11) **EP 3 424 757 B1**
(45) Date de publication et mention de la délivrance du brevet: **17.02.2021**
(21) Numéro de dépôt: 18181255.3
(22) Date de dépôt: 02.07.2018
(51) Int. Cl.: B60G 9/00

(54) **TRAIN ARRIÈRE DE VÉHICULE AUTOMOBILE COMPRENANT DES MOYENS D'ABSORPTION DE L'ÉNERGIE D'UN CHOC LATÉRAL**
HINTERACHSE EINES KRAFTFAHRZEUGS, DIE ENERGIEABSORPTIONSMITTEL EINES SEITLICHEN AUFPRALLS UMFASST
AUTOMOTIVE VEHICLE REAR TRAIN COMPRISING MEANS FOR ABSORBING THE ENERGY OF A SIDE IMPACT

(30) Priorité: 04.07.2017 FR 1756287
(43) Date de publication de la demande: 09.01.2019
(73) Titulaire: RENAULT s.a.s., 92100 Boulogne-Billancourt (FR)
(72) Inventeur: SAUDEMONT, Yoann, 28210 LES PINTHIERES (FR); ENJOLRAS, Gilles, 78990 ELANCOURT (FR); PISSOT, Jean-Paul, 28210 FAVEROLLES (FR)

(56) Documents cités:
- EP-A2- 0 947 362
- CN-A- 104 442 272
- JP-A- H0 379 410
- JP-A- H11 165 518

## Description

La présente invention concerne le domaine des véhicules automobiles, et plus particulièrement, les trains arrière de véhicules automobiles.

L'invention concerne les trains arrière de type à essieux souples comprenant une caisse et une barre de train de type « Panhard » ou bielle montée à rotation sur ladite caisse. Un exemple de train comprenant une barre de train de type « Panhard » est divulgué dans JP H03 79410.

Une telle barre de train permet d'absorber un effort de compression par flambage de celle-ci au-delà d'une valeur de seuil. La déformation de cette barre de train entraîne un bruit de contact avec des éléments du châssis et de la caisse du véhicule, ce qui permet d'alerter le conducteur du véhicule qu'il y a eu un choc latéral à la roue. Toutefois, en cas de choc latéral transmettant un effort en traction à la barre de train, celle-ci ne permet pas d'absorber le choc, transmettant ainsi des énergies élevées dans la structure du véhicule, et il n'est alors pas possible d'alerter le conducteur du véhicule.

Une solution consiste à rendre facilement remplaçables les pièces de la structure impactées, afin de permettre une réparation facile en cas de choc. Toutefois, il est nécessaire de surdimensionner la fixation de la barre de train sur la chape, engendrant un coût élevé de fabrication.

L'objectif de l'invention est donc de pallier ces inconvénients et d'améliorer l'absorption des énergies transmises à la structure du véhicule automobile en cas de choc latéral. L'invention a également pour objectif d'alerter le conducteur du véhicule en cas de choc à la roue endommageant du côté du véhicule où la barre de train travaille en traction, c'est-à-dire du côté où est fixée ladite barre de train à la caisse du véhicule.

La présente invention a pour objet un train arrière de véhicule automobile comprenant une caisse, un essieu arrière reliant deux roues, une barre de train comprenant une première extrémité montée à rotation sur ledit essieu.

Le train arrière comprend un organe de sûreté fixé respectivement à la caisse du véhicule et à une deuxième extrémité de la barre de train. L'organe de sûreté est configuré pour permettre le déplacement angulaire du point de fixation de la barre de train audit organe lors d'un choc à la roue située du côté où ladite barre est fixée audit organe.

Ainsi, grâce au déplacement angulaire du point de fixation de la barre de train, celle-ci n'est pas endommagée lors d'un choc à la roue située du côté où ladite barre est fixée audit organe.

Avantageusement, le train arrière comprend une barre de renfort comportant une première extrémité montée à rotation sur la caisse, du côté où la barre de train est fixée à l'essieu, et une deuxième extrémité fixé à l'organe de sureté.

La barre de renfort est fixée de manière à travailler en direction opposée par rapport à la barre de train. En d'autres termes, lorsque la barre de train travaille en traction, la barre de renfort travaille en compression et inversement. Grâce à ce déplacement latéral, en cas de choc latéral à la roue, le point de fixation commun aux deux barres peut se déplacer sans endommager la caisse. En effet, la barre de renfort absorbe l'énergie du choc latéral par flambage.

La barre de renfort peut présenter une section en forme de U comprenant deux perçages coaxiaux de réception d'un axe, la barre de renfort et la barre de train étant montées à rotation autour dudit axe.

Par exemple, l'organe de sûreté comprend une première extrémité fixée à la caisse et une deuxième extrémité recevant ledit axe.

Selon un mode de réalisation, l'organe de sûreté a la forme d'une biellette articulée autour de deux liaisons pivots permettant d'assurer une liberté de déplacement selon la direction latérale du véhicule du point de fixation commun à la barre de train et la barre de renfort lors d'un choc à la roue située du côté où ladite barre est fixée audit organe. Ainsi, lors d'un tel effort de traction de la barre de train, la biellette pivote par son extrémité fixée à la caisse autour de son point de fixation à caisse, permettant au point de fixation commun aux barres de se déplacer angulairement autour dudit point de fixation à la caisse engendrant le déplacement selon la direction latérale de la barre de train et de la barre de renfort. La barre de renfort absorbe ainsi l'énergie du choc latéral par flambage. Grâce à la biellette, la caisse et la barre de train ne sont pas endommagées.

Selon un autre mode de réalisation, l'organe de sûreté est une pièce mécanique ou chape déformable et ductile, configurée pour se déformer et se déplacer angulairement par rapport à son point de fixation à la caisse en cas de choc latéral à la roue.

Grâce à la déformation permanente d'une telle chape déformable dont le comportement est fortement ductile, il est possible d'obtenir une déformation suffisante de cette chape déformable pour alerter le conducteur du véhicule qu'un choc latéral à la roue endommageant s'est produit, sans qu'il perde le contrôle du véhicule.

La chape déformable a par exemple une forme en L comprenant une première partie fixée à la caisse, par exemple par des vis, et une deuxième partie formant un angle compris entre 45° et 90° par rapport à la première partie et s'étendant vers l'essieu. L'extrémité de la deuxième partie de la chape déformable peut comprendre un perçage de réception de l'axe sur lequel sont montées à rotation la barre de train et la barre de renfort. L'axe peut être sous la forme d'une vis.

La chape déformable fait, par exemple, partie de la barre de renfort.

Par exemple, la chape déformable comprend une partie inférieure fixée à la barre de renfort, par exemple par soudage, deux flancs latéraux s'étendant vers la caisse et une partie supérieure fixée respectivement aux extrémités supérieures des flancs latéraux, par exemple par soudage, et à la caisse, par exemple par des moyens de visseries.

L'organe de sûreté peut être réalisé à partir de tôles métalliques embouties et usinées pour enlever de la matière afin de lui permettre d'être ductile, c'est-à-dire de se déformer sans se rompre lors d'un choc latéral à la roue.

Lors d'un effort de traction de la barre de train, les flancs latéraux de la chape déformable se déforment permettant au point de fixation de la barre de train de se déplacer angulairement engendrant le déplacement selon la direction latérale de la barre de train. L'ensemble barre de renfort/chape déformable absorbent ainsi l'énergie du choc latéral respectivement par flambage et déformation. Grâce à la chape déformable, la caisse et la barre de train ne sont pas endommagées.

L'organe de sûreté et la barre de renfort peuvent être fixés respectivement à la caisse par des vis, des douilles ou des liaisons rotules, ou tout autre moyen permettant à ces pièces d'être interchangeables et ainsi de limiter les frais de réparation. Ainsi, l'organe de sûreté et/ou la barre de renfort sont démontables, réduisant le coût de réparation.

L'organe de sûreté est par exemple réalisé en matériau fortement ductile, tel que par exemple, de l'acier, de l'aluminium avec un allongement à la rupture élevé ou tout autre matériau permettant d'obtenir de fortes déformations sans risque de rupture notamment pour des raisons de sécurité. L'organe de sûreté est par exemple réalisé en acier HE450M.

Selon un second aspect, l'invention concerne un véhicule automobile comprenant une caisse, au moins deux roues et un train arrière tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique de face d'une partie d'un train arrière d'un véhicule automobile selon un mode de réalisation de l'invention ;
- la figure 2 représente la partie de train arrière selon la figure 1, après un effort de traction sur la barre de train ;
- la figure 3 représente la partie de train arrière selon la figure 1, après un effort de compression sur la barre de train ;
- la figure 4 représente une partie d'un train arrière d'un véhicule automobile selon un deuxième mode de réalisation de l'invention ;
- la figure 5 représente la partie de train arrière selon la figure 4, après un effort de traction sur la barre de train ;
- la figure 6 représente une partie d'un train arrière d'un véhicule automobile selon un troisième mode de réalisation de l'invention ;
- la figure 7 représente la partie de train arrière selon la figure 6, après un effort de traction sur la barre de train ; et
- la figure 8 est une vue de détails de l'organe de sûreté des figures 6 et 7.

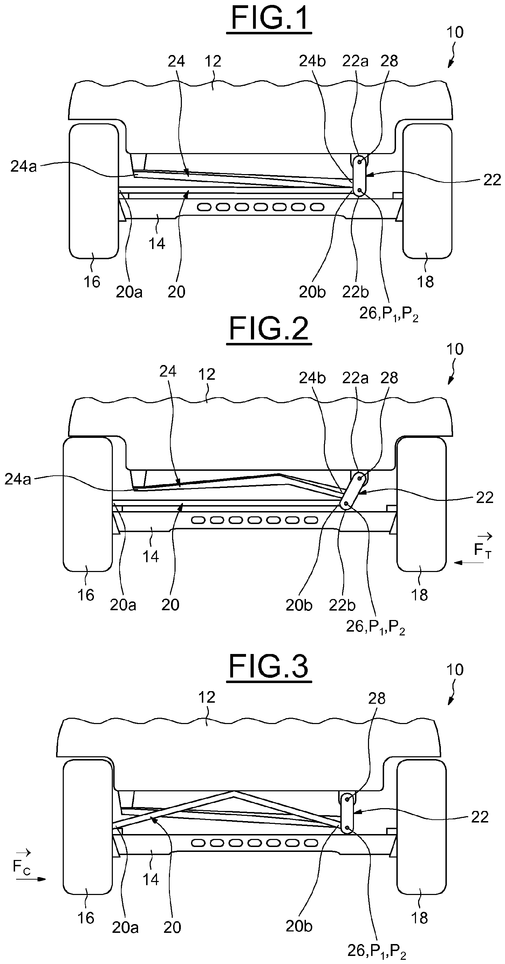

Les figures 1 à 7 représentent une partie d'un train arrière 10 d'un véhicule automobile.

La partie de train arrière 10 comprend une caisse 12, non démontable, un essieu arrière 14 reliant deux roues 16, 18, une barre de train 20 ou bielle comprenant une première extrémité 20a montée à rotation sur l'essieu 14 et une deuxième extrémité 20b montée à rotation sur un organe de sûreté 22 fixé à la caisse 12.

La barre de train 20 peut être une barre de type « Panhard », consistant en une tige métallique rigide permettant la liaison entre une extrémité de l'essieu et la caisse et permettant un guidage latéral de l'essieu arrière.

La barre de train 20 travaille en compression pour les chocs à la roue située du côté où ladite barre est fixée à l'essieu (situé à gauche sur les figures) et en traction pour les chocs à la roue située du côté où ladite barre est fixée à la caisse (situé à droite sur les figures).

La partie de train arrière 10 comprend également une barre de renfort 24 montée en série avec la barre de train 20 et comprenant une première extrémité 24a montée à rotation sur la caisse 12, du côté où la barre de train est fixée à l'essieu, et une deuxième extrémité 24b montée à rotation sur la barre de train 20 et sur l'organe de sûreté 22, du côté où la barre de train est fixée à la caisse. La barre de renfort 24 est fixée de manière à travailler en direction opposée par rapport à la barre de train. En d'autres termes, lorsque la barre de train 20 travaille en traction, la barre de renfort 24 travaille en compression et inversement.

Une telle barre de renfort 24 entre la caisse 12 et le côté opposé de la structure du soubassement permet de repousser une partie des efforts de traction en cas de choc latéral. Toutefois, une telle barre de renfort ne permet pas d'absorber toute l'énergie du choc latéral.

La barre de renfort 24 présente, par exemple, une section en forme de U, comprenant deux perçages (non représentés) coaxiaux de réception d'un axe 26. La barre de renfort 24 est montée à rotation sur ledit axe 26. L'extrémité 20b de la barre de train 20 est montée à l'intérieur de la forme en U de ladite barre de renfort et à rotation autour dudit axe 26.

Tel qu'illustré sur les figures 1 à 3, l'organe de sûreté 22 comprend une première extrémité 22a montée à rotation sur la caisse 12 par un premier axe 28 et une deuxième extrémité 22b montée à rotation sur l'axe 26 sur lequel sont montées à rotation les deuxièmes extrémités 20b, 24b de la barre de train 20 et de la barre de renfort 24. Le point de fixation P1 de la barre de train 20 et le point de fixation P2 de la barre de reprise d'effort 24 sur l'organe de sûreté 22 sont ici confondus. L'organe de sûreté 22 a ici la forme d'une bielle ou biellette articulée autour de deux liaisons pivots réalisées respectivement par un assemblage vissé ou par des douilles permettant d'assurer une liberté de déplacement selon la direction latérale du véhicule latéral des points de fixation P1, P2 commun à la barre de train 20 et la barre de renfort 24 en cas de choc latéral à la roue.

Grace à ce déplacement latéral, en cas de choc latéral à la roue, le point de fixation P1, P2 commun aux deux barres peut se déplacer sans endommager l'organe de sûreté 22.

Lors d'un effort de traction F_{T}, par exemple, en cas de choc latéral, par exemple sur une roue arrière du côté de la caisse illustré sur la figure 2, la biellette 22 pivote par son extrémité 22a fixée à la caisse autour de l'axe 28, permettant au point de fixation commun P1, P2 de se déplacer angulairement autour dudit axe 28 engendrant le déplacement selon la direction latérale de la barre de train 20 et de la barre de renfort 24. La barre de renfort 24 absorbe ainsi l'énergie du choc latéral par flambage. Grâce à la biellette, la caisse 12 et la barre de train 20 ne sont pas endommagées.

Lors d'un effort en compression Fc, illustré sur la figure 3, la barre de train 20 absorbe les efforts par flambage. La barre de renfort 24 et la biellette 22 ne bougent pas et la caisse 12 est ainsi préservée.

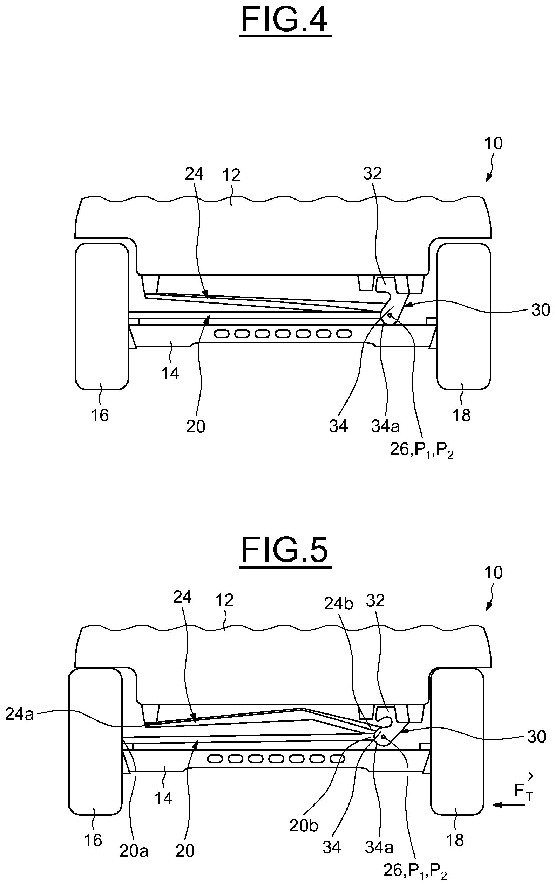

Les modes de réalisation illustrés sur les figures 4 à 8 diffèrent du mode de réalisation illustré sur les figures 1 à 3 uniquement par la forme de l'organe de sûreté 30, 40. Les mêmes éléments portent les mêmes références.

Sur les figures 4 à 8, l'organe de sûreté 30, 40 se présente sous la forme d'une pièce mécanique déformable et ductile, c'est-à-dire qu'elle peut être tirée, étirée sans se rompre.

L'organe de sureté 30, 40 est configuré pour se déformer et se déplacer angulairement par rapport à son point de fixation à la caisse en cas de choc latéral à la roue sans détérioration de la caisse.

Tel qu'illustré sur les figures 4 et 5, l'organe de sureté 30 ou chape déformable a une forme en L comprenant une première partie 32 fixée à la caisse 12 par exemple par des vis et une deuxième partie 34 formant un angle compris entre 45° et 90° par rapport à la première partie 32 et s'étendant vers l'essieu 14. L'extrémité 34a de la deuxième partie 34 de la chape déformable 30 comprend un perçage (non référencé) de réception de l'axe 26 sur lequel sont montées à rotation la barre de train 20 et la barre de renfort 24. L'axe 26 peut être sous la forme d'une vis.

Lors d'un effort de traction F_{T}, par exemple, en cas de choc latéral, par exemple sur une roue arrière du côté de la caisse illustré sur la figure 5, la deuxième partie 34 de la chape déformable 30 pivote par son extrémité fixée à la première partie 32, permettant au point de fixation commun P1, P2 de se déplacer angulairement autour du même axe engendrant le déplacement selon la direction latérale de la barre de train 20 et de la barre de renfort 24. La barre de renfort 24 absorbe ainsi l'énergie du choc latéral par flambage. Grâce à la chape déformable, la caisse 12 et la barre de train 20 ne sont pas endommagées.

Lors d'un effort en compression Fc, non représenté, la barre de train 20 absorbe les efforts par flambage. La barre de renfort 24 et la chape déformable 30 ne bougent pas et la caisse 12 est ainsi préservée.

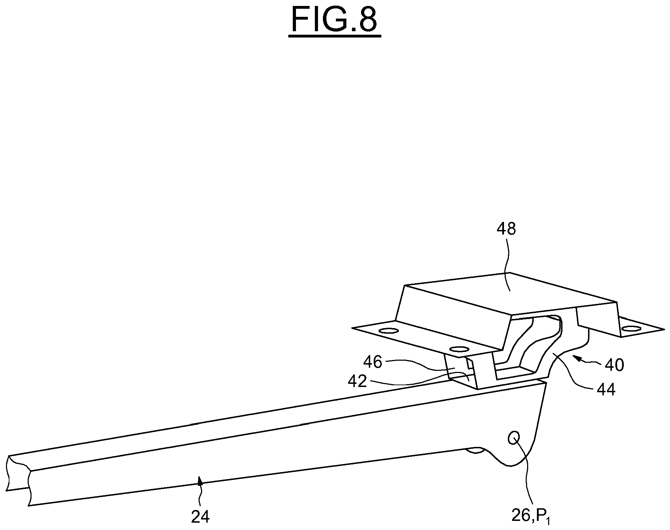

Tel qu'illustré en détails sur la figure 8, l'organe de sûreté 40 ou chape déformable fait partie de la barre de renfort 24. L'organe de sûreté 40 comprend une partie inférieure 42 fixée à la barre de renfort 24, par exemple, par soudage, deux flancs latéraux 44, 46 s'étendant vers la caisse 12 et une partie supérieure 48 fixée respectivement aux extrémités supérieures des flancs latéraux par exemple par soudage, et à la caisse, par exemple par des moyens de visseries.

L'organe de sûreté est réalisé à partir de tôles métalliques embouties et usinées pour enlever de la matière afin de lui permettre d'être ductile, c'est-à-dire de se déformer sans se rompre lors d'un choc latéral à la roue.

Dans ce mode de réalisation, la barre de train 20 est fixée à l'ensemble comprenant la barre de renfort 24 et la chape déformable 40.

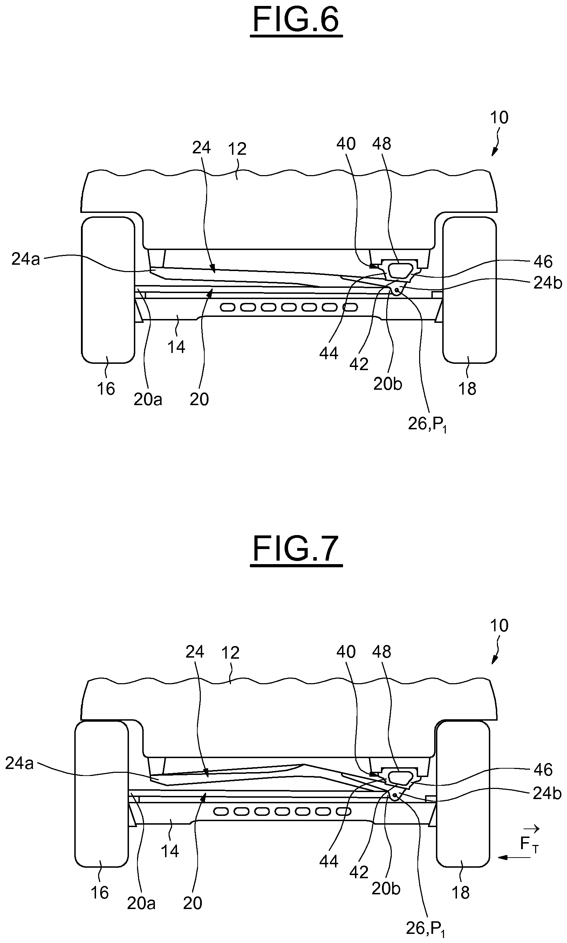

Lors d'un effort de traction F_{T}, par exemple, en cas de choc latéral, par exemple sur une roue arrière du côté de la caisse illustré sur la figure 7, les flancs latéraux 44, 46 de la chape déformable 40 se déforment permettant au point de fixation P1 de la barre de train 20 de se déplacer angulairement engendrant le déplacement selon la direction latéral de la barre de train 20. L'ensemble barre de renfort 24/chape déformable 40 absorbent ainsi l'énergie du choc latéral respectivement par flambage et déformation. Grâce à la chape déformable, la caisse 12 et la barre de train 20 ne sont pas endommagées.

Lors d'un effort en compression Fc, non représenté, la barre de train 20 absorbe les efforts par flambage. La barre de renfort 24 et la chape déformable 40 ne bougent pas et la caisse 12 est ainsi préservée.

Dans tous les modes de réalisation, l'organe de sûreté 22, 30, 40 et la barre de renfort 24 sont fixés respectivement à la caisse par des vis, des douilles ou de liaisons rotules, ou tout autre moyen permettant à ces pièces d'être interchangeables et ainsi de limiter les frais de réparation.

Dans tous les modes de réalisation, l'organe de sûreté 22, 30, 40 est réalisé en matériau fortement ductile, tel que par exemple, de l'acier, de l'aluminium avec un allongement à la rupture élevé ou tout autre matériau permettant d'obtenir de fortes déformations sans risque de rupture notamment pour des raisons de sécurité. L'organe de sûreté 22, 30, 40 est par exemple réalisé en acier HE450M.

Ainsi, grâce à l'invention, l'organe de sûreté intervient comme une pièce fusible lorsque l'énergie d'un choc latéral est transmise à une roue arrière du véhicule automobile. Sa déformation, ainsi que la déformation de la barre de renfort permettent de générer une nuisance sonore alertant le conducteur du véhicule qu'un choc latéral endommageant à la roue s'est produit.

## Revendications

1. Train arrière de véhicule automobile comprenant une caisse (12), un essieu arrière (14) reliant deux roues (16, 18), une barre de train (20) comprenant une première extrémité (20a) montée à rotation sur ledit essieu, **caractérisé en ce qu'**il comprend un organe de sûreté (22, 30, 40) fixé respectivement à la caisse (12) du véhicule et à une deuxième extrémité (20b) de la barre de train, ledit organe de sûreté étant configuré pour permettre le déplacement angulaire du point de fixation (P1) de la barre de train (20) par rapport audit organe lors d'un choc à la roue située du côté où ladite barre est fixée audit organe.

2. Train arrière selon la revendication 1, comprenant une barre de renfort (24) comportant une première extrémité (24a) montée à rotation sur la caisse (12), du côté où la barre de train (20) est fixée à l'essieu (14), et une deuxième extrémité (24b) fixée à l'organe de sûreté (22, 30, 40).

3. Train arrière selon la revendication 2, dans lequel la barre de renfort (24) présente une section en forme de U comprenant deux perçages coaxiaux de réception d'un axe (26), la barre de renfort (24) et la barre de train (20) étant montées à rotation autour dudit axe (26).

4. Train arrière selon la revendication 3, dans lequel l'organe de sûreté (22, 30) comprend une première extrémité (22a, 30a) fixée à la caisse (12) et une deuxième extrémité (22b, 30b) recevant ledit axe (26).

5. Train arrière selon l'une quelconque des revendications précédentes, dans lequel l'organe de sûreté (22) a la forme d'une biellette articulée autour de deux liaisons pivots permettant d'assurer une liberté de déplacement selon la direction latérale du véhicule latéral du point de fixation (P1, P2) commun à la barre de train (20) et la barre de renfort (24) lors d'un choc à la roue située du côté où ladite barre est fixée audit organe.

6. Train arrière selon l'une quelconque des revendications précédentes, dans lequel l'organe de sûreté (30, 40) est une pièce mécanique déformable et ductile, configurée pour se déformer et se déplacer angulairement par rapport à son point de fixation à la caisse (12) en cas de choc latéral à la roue.

7. Train arrière selon la revendication 6, dans lequel l'organe de sûreté (30) a une forme en L comprenant une première partie (32) fixée à la caisse (12) et une deuxième partie (34) formant un angle compris entre 45° et 90° par rapport à la première partie (32) et s'étendant vers l'essieu (14).

8. Train arrière selon la revendication 6, dans lequel l'organe de sûreté (40) fait partie de la barre de renfort (24).

9. Train arrière selon la revendication 8, dans lequel l'organe de sûreté (40) comprend une partie inférieure (42) fixée à la barre de renfort (24), deux flancs latéraux (44, 46) s'étendant vers la caisse (12) et une partie supérieure (48) fixée respectivement aux extrémités supérieures des flancs latéraux et à la caisse.

10. Véhicule automobile comprenant une caisse (12), un train arrière (10) selon l'une quelconque des revendications précédentes.

## Patentansprüche

1. Kraftfahrzeughinterachse, umfassend einen Aufbau (12), eine hintere Radachse (14), die zwei Räder (16, 18) verbindet, und eine Achsstrebe (20), die ein erstes Ende (20a) umfasst, das drehbar an der Radachse montiert ist, **dadurch gekennzeichnet, dass** sie ein Sicherheitsglied (22, 30, 40) umfasst, das jeweils an dem Aufbau (12) des Fahrzeugs und an einem zweiten Ende (20b) der Achsstrebe befestigt ist, wobei das Sicherheitsglied dazu ausgestaltet ist, bei einem Aufprall an dem Rad, das an der Seite, an der die Achsstrebe (20) an dem Glied befestigt ist, angeordnet ist, die winkelförmige Bewegung des Befestigungspunkts (P1) der Strebe bezüglich des Glieds zu gestatten.

2. Hinterachse nach Anspruch 1, umfassend eine Verstärkungsstrebe (24), die ein erstes Ende (24a), das an der Seite drehbar an dem Aufbau (12) montiert ist, an der die Achsstrebe (20) an der Radachse (14) befestigt ist, und ein an dem Sicherheitsglied (22, 30, 40) befestigtes zweites Ende (24b) aufweist.

3. Hinterachse nach Anspruch 2, wobei die Verstärkungsstrebe (24) einen U-förmigen Querschnitt aufweist, der zwei koaxiale Bohrungen zur Aufnahme eines Bolzens (26) umfasst, wobei die Verstärkungsstrebe (24) und die Achsstrebe (20) um den Bolzen (26) drehbar montiert sind.

4. Hinterachse nach Anspruch 3, wobei das Sicherheitsglied (22, 30) ein erstes Ende (22a, 30a), das an dem Aufbau (12) befestigt ist, und ein zweites Ende (22b, 30b), das den Bolzen (26) aufnimmt, umfasst.

5. Hinterachse nach einem der vorhergehenden Ansprüche, wobei das Sicherheitsglied (22) die Form einer um zwei Drehzapfverbindungen angelenkten Schwinge hat, wodurch eine Bewegungsfreiheit in der seitlichen Richtung des Fahrzeugs des der Achsstrebe (20) und der Verstärkungsstrebe (24) gemeinsamen Befestigungspunkts (P1, P2) bei einem Aufprall an dem Rad sichergestellt werden kann, das an der Seite, an der die Strebe an dem Glied befestigt ist, angeordnet ist.

6. Hinterachse nach einem der vorhergehenden Ansprüche, wobei das Sicherheitsglied (30, 40) ein deformierbares und duktiles mechanisches Teil ist, das dazu ausgestaltet ist, sich bei einem seitlichen Aufprall an dem Rad zu deformieren und sich winkelmäßig bezüglich seines Befestigungspunkts an dem Aufbau (12) zu bewegen.

7. Hinterachse nach Anspruch 6, wobei das Sicherheitsglied (30) eine L-Form hat, die einen ersten Teil (32), der an dem Aufbau (12) befestigt ist, und einen zweiten Teil (34) umfasst, der bezüglich des ersten Teils (32) einen Winkel zwischen 45° und 90° bildet und sich zu der Radachse (14) hin erstreckt.

8. Hinterachse nach Anspruch 6, wobei das Sicherheitsglied (40) Teil der Verstärkungsstrebe (24) ist.

9. Hinterachse nach Anspruch 8, wobei das Sicherheitsglied (40) einen unteren Teil (42), der an der Verstärkungsstrebe (24) befestigt ist, zwei seitliche Flanken (44, 46), die sich zu dem Aufbau (12) hin erstrecken, und einen oberen Teil (48) umfasst, der jeweils an den oberen Enden der seitlichen Flanken und an dem Aufbau befestigt ist.

10. Kraftfahrzeug, umfassend einen Aufbau (12), eine Hinterachse (10) nach einem der vorhergehenden Ansprüche.

## Claims

1. Rear end of a motor vehicle comprising a body (12), a rear axle (14) connecting two wheels (16, 18), a stay (20) comprising a first end (20a) mounted so as to rotate on said axle, **characterized in that** it comprises a safety member (22, 30, 40) respectively fastened to the body (12) of the vehicle and to a second end (20b) of the stay, said safety member being configured to permit the angular displacement of the fastening point (P1) of the stay (20) relative to said member in the event of an impact at the wheel located to the side at which said bar is fastened to said member.

2. Rear end according to Claim 1, comprising a reinforcing bar (24) comprising a first end (24a) that is mounted so as to rotate on the body (12), on the side at which the stay (20) is fastened to the axle (14), and a second end (24b) fastened to the safety member (22, 30, 40) .

3. Rear end according to Claim 2, wherein the reinforcing bar (24) has a U-shaped cross section comprising two coaxial drilled holes for receiving a pin (26), the reinforcing bar (24) and the stay (20) being mounted so as to rotate about said pin (26).

4. Rear end according to Claim 3, wherein the safety member (22, 30) comprises a first end (22a, 30a) fastened to the body (12) and a second end (22b, 30b) receiving said pin (26).

5. Rear end according to any one of the preceding claims, wherein the safety member (22) is in the form of a billet articulated about two pivot connections, by means of which the fastening point (P1, P2) shared by the stay (20) and the reinforcing bar (24) is free to move laterally, in the lateral direction of the vehicle, in the event of an impact at the wheel located to the side at which said bar is fastened to said member.

6. Rear end according to any one of the preceding claims, wherein the safety member (30, 40) is a mechanical part that is deformable and ductile and is configured to form and move angularly relative to the point at which it is fastened to the body (12) in the event of a lateral impact at the wheel.

7. Rear end according to Claim 6, wherein the safety member (30) is L-shaped, comprising a first portion (32) fastened to the body (12) and a second portion (34) forming an angle of between 45° and 90° relative to the first portion (32) and extending towards the axle (14).

8. Rear end according to Claim 6, wherein the safety member (40) forms part of the reinforcing bar (24).

9. Rear end according to Claim 8, wherein the safety member (40) comprises a lower portion (42) fastened to the reinforcing bar (24), two lateral flanks (44, 46) extending towards the body (12) and an upper portion (48) that is respectively fastened to the upper ends of the lateral flanks and to the body.

10. Motor vehicle comprising a body (12), a rear end (10) according to any one of the preceding claims.
